# EUROPEAN PATENT SPECIFICATION

(11) **EP 3 939 853 B1**
(45) Date of publication and mention of the grant of the patent: **25.12.2024**
(21) Application number: 20769179.1
(22) Date of filing: 06.02.2020
(51) Int. Cl.: B61D 27/00, B04C 5/185, B04C 5/28, B60H 1/00, B60H 3/06, F24F 8/183

(54) **VENTILATOR FOR RAILROAD VEHICLE**
LÜFTER FÜR SCHIENENFAHRZEUG
VENTILATEUR DESTINÉ À UN VÉHICULE FERROVIAIRE

(30) Priority: 13.03.2019 JP 2019045408
(43) Date of publication of application: 19.01.2022
(73) Proprietor: Hitachi, Ltd., Tokyo 100-8280 (JP); East Japan Railway Company, Tokyo 151-8578 (JP)
(72) Inventor: YAMAKAWA, Hironobu, Tokyo 100-8280 (JP); KOBAYASHI, Katsutoshi, Tokyo 100-8280 (JP); SHIBUYA, Tomoyuki, Tokyo 100-8280 (JP); AKIMARU, Daisuke, Tokyo 100-8280 (JP); FUJII, Yoshihiro, Tokyo 151-8578 (JP); NAMIKI, Takayuki, Tokyo 151-8578 (JP)
(74) Representative: Strehl Schübel-Hopf & Partner
(86) International application number: PCT/JP2020/004594
(87) International publication number: WO 2020/184010

(56) References cited:
- CN-A- 101 885 338
- DE-A1- 102007 011 452
- JP-A- 2015 192 982
- JP-A- 2017 159 848
- JP-A- 2019 055 398

## Description

### Technical Field

The present invention relates to a VENTILATOR FOR RAILROAD VEHICLE.

### Background Art

A rail vehicle such as a railroad vehicle, especially, a high-speed vehicle, has a highly airtight vehicle structure, and therefore, not natural ventilation but forced ventilation is applied generally for ventilation in the vehicle. In such a rail vehicle, a ventilation apparatus including an air supply fan for taking fresh air outside the vehicle into the vehicle and an exhaust fan for exhausting contaminated air in the vehicle to the outside of the vehicle is arranged under the floor of the vehicle. The forced ventilation is implemented by the ventilation apparatus.

Incidentally, the air outside the vehicle is not always clean, and, for example, the vehicle sometimes passes through a dusty section. Therefore, a prefilter formed, for example, from a nonwoven fabric is provided at an opening (fresh air intake port) of the ventilation apparatus for the air supply fan such that dust is collected from the outside air and clean air is supplied to the inside of the vehicle.

According to the prefilter, as the time during which the prefilter is used increases, dust is accumulated and contamination advances, and therefore, it is necessary to clean the prefilter in a fixed cycle. However, if dust sticks to the texture of the prefilter, then fixed labor is required for removal of the dust. Especially, depending upon the degree of contamination, cleaning of the prefilter becomes difficult to such a degree that the prefilter cannot be reused and it is obliged to exchange the prefilter. If the frequency of exchange of the prefilter, which is comparatively expensive, increases, then there is the possibility that the maintenance cost may increase.

Further, since a nonwoven fabric is used, there is a problem that the dust collection performance of the prefilter depends upon the texture of the cloth. For example, if a rough texture nonwoven fabric is used, then although clogging is less likely to occur, the dust collection performance is not sufficient. In contrast, if a fine texture nonwoven fabric is used so as to obtain a high dust collection performance in order to improve the cleanliness of air in the vehicle, then it becomes necessary to increase the blowing performance of the air supply fan in order to overcome high-pressure loss caused by use of the fine texture nonwoven fabric, resulting in the possibility that the cost may increase. Further, where a higher dust collection performance is demanded, clogging of the prefilter becomes severe, and this results in the possibility that the cleaning frequency may increase and the maintenance cost may increase.

From such reasons as described above, it has been proposed to incorporate a dust collector of the cyclone type in place of the prefilter. The cyclone type dust collector acts to generate whirl flows in a cylindrical air passage to apply centrifugal force to dust thereby to separate the dust from clean air. Therefore, the cyclone type dust collector has an advantage that clogging of the air passage is suppressed and cleanliness is enhanced in comparison with those in the case in which the prefilter is provided. Patent Document 1 discloses an example in which a cyclone type dust collector is installed under the floor of a vehicle.

### Prior Art Document

### Patent Document

Patent Document 1: JP-2015-192982-A JP 2017 159848 A discloses a ventilator for a railroad vehicle in line with the preamble of present claim 1.

### Summary of the Invention

### Problems to be Solved by the Invention

Where the cyclone type dust collector disclosed in Patent Document 1 is provided, it is expected that such problems by the prefilter as described above are solved. However, in the technique of Patent Document 1, since the cyclone type dust collector is placed separately from a ventilation apparatus, it is necessary to secure a large installation space for the entire system. Especially, in recent years, although a vehicle is designed to place equipment under the floor in a high density, it is considered that a conventional cyclone type dust collector is not suitable for such a vehicle design as just described because it is large in size.

Further, while a cylindrical part (cyclone tubular body) for collecting dust in the cyclone type dust collector is attached to a ventilation apparatus through an exhaust pipe that is an introduction pipe, air flows eccentrically in the air supply fan and there is the possibility that the dust collection performance and the blowing performance may be suppressed and increase in the pressure loss may be caused. Further, since the position of the cyclone tubular body is near to an adjacent apparatus, also the air supply port of the cyclone tubular body comes near to the adjacent apparatus. Therefore, there is the possibility that bending or the like of the air supply pipe to the cylindrical part may become so severe that the air intake performance may be degraded. Further, since the cyclone tubular body has a comparatively large diameter, there is also the possibility that centrifugal force at an equal wind speed may decrease to degrade the dust collection performance.

The object of the present invention resides in provision of a VENTILATOR FOR RAILROAD VEHICLE including a dust collector that can suppress pressure loss to secure a high dust collection efficiency and suppress the installation space of the apparatus.

### Means for Solving the Problems

In order to solve the problems described above, one of representative VENTILATORS FOR RAILROAD VEHICLE of the present invention is achieved by a VENTILATOR FOR RAILROAD VEHICLE, including: a ventilation apparatus for replacing air in a vehicle; and a dust collector annexed to the ventilation apparatus, in which the dust collector includes a housing and a cyclone tubular body provided in an inside of the housing, the ventilation apparatus includes an air supply blower that supplies fresh air outside the vehicle, the fresh air having passed through the cyclone tubular body to the vehicle, the housing includes a metal net through which fresh air is to be taken into the cyclone tubular body and a back plate connecting to the metal net, and the dust collector is connected to the ventilation apparatus such that the back plate is positioned in an inside of the ventilation apparatus.

### Advantages of the Invention

With the present invention, a VENTILATOR FOR RAILROAD VEHICLE can be provided which includes a dust collector enabling suppression of pressure loss to secure a high dust collection efficiency and suppression of installation space of the apparatus.

Problems, configurations, and effects other than those described above are made clear by the description of embodiments hereinafter described.

### Brief Description of the Drawings

FIG. 1 is a ventilation air system diagram depicting a state in which a ventilation apparatus according to an embodiment is attached to a vehicle and depicting flows of fresh air and exhaust air in ventilation.
FIG. 2 is a perspective view of the ventilation apparatus that includes a dust collector according to the present embodiment.
FIG. 3 is a partial sectional view of the ventilation apparatus including the dust collector according to the embodiment, taken along a plane that intersects a longitudinal direction of a vehicle.
FIG. 4 is a sectional view of the ventilation apparatus including the dust collector according to the present embodiment, taken along a perpendicular plane extending along the longitudinal direction of the vehicle.
FIG. 5 is a schematic view depicting a procedure for recovering dust separated by the dust collector annexed to the ventilation apparatus according to the present embodiment.
FIG. 6 is a partial exploded view of the dust collector annexed to the ventilation apparatus according to the present embodiment.
FIG. 7 is a perspective view of another embodiment of the dust collector annexed to the ventilation apparatus according to the present embodiment.
FIG. 8 is a sectional view of under the floor of a vehicle in another embodiment of the ventilation apparatus according to the present embodiment.
FIG. 9 is a perspective view depicting an example of a conventional ventilation apparatus.

### Modes for Carrying Out the Invention

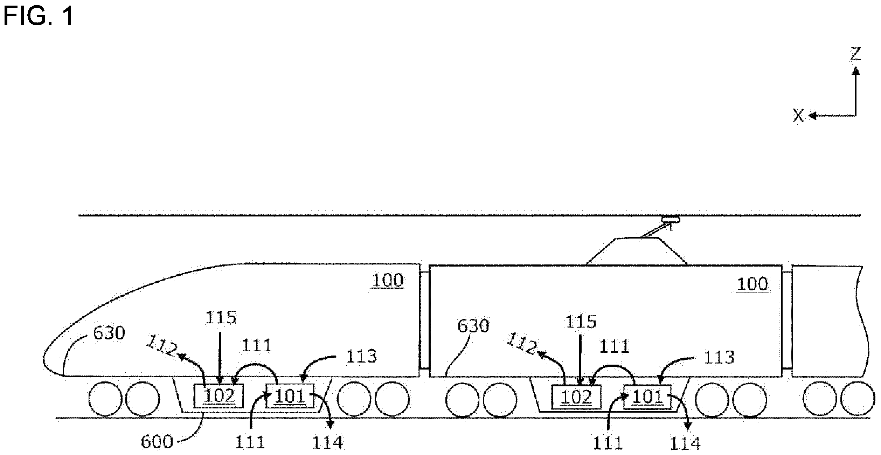

In the following, a first embodiment is described with reference to FIGS. 1 to 7. First, directions are defined. A direction along a longitudinal (rail) direction of a vehicle 100 is determined as X direction; another direction along a widthwise (railroad tie) direction of the vehicle 100 is determined as Y direction; and a heightwise direction of the vehicle 100 is determined as Z direction. In the following description, the directions are sometimes represented simply as X direction, Y direction and Z direction.

Rail vehicles are vehicles that are driven along a laid track and include a railroad vehicle, a monorail vehicle, a tram, a new transportation vehicle and so forth. Embodiments of the present invention are described taking a railroad vehicle as a representative example of rail vehicles. The present invention can be applied not only to a high-speed rail vehicle but also to all rail vehicles.

FIG. 1 is a ventilation air system diagram schematically depicting flows of fresh air and exhaust air that are ventilated, together with a state in which the ventilation apparatus according to the present embodiment is attached to a railroad vehicle. If the vehicle 100 is driven at a high speed, then the vehicle outside pressure varies significantly when the vehicle 100 passes through a tunnel or the like. Even in such a case as just described, in order to prevent the vehicle internal pressure from fluctuating by a large amount so such a degree that passengers and so forth have discomfort in hearing, the vehicle 100 is configured from a vehicle structure having high airtightness.

Further, where the vehicle 100 has a vehicle structure having high airtightness, since the ventilation in the vehicle is significant, the vehicle 100 includes, under the floor thereof, a ventilation apparatus 101 for forcibly ventilating the air between the outside and the inside of the vehicle, and an air conditioner 102. The ventilation apparatus 101 and the air conditioner 102 are provided below a floorboard 630. The ventilation apparatus 101 includes an air supply blower for supplying the air (fresh air) outside the vehicle into the inside of the vehicle and an air exhaust blower for discharging exhaust air in the vehicle to the outside of the vehicle. Generally, the vehicle 100 that travels at a high speed incorporates the ventilation apparatus 101 and the air conditioner 102 under the floor of the vehicle 100 in order to place the center of gravity to a lower position.

The ventilation apparatus 101 supplies fresh air 111 taken in from the outside of the vehicle to the air conditioner 102 and discharges exhaust air 113 in the vehicle to the outside of the vehicle to forcibly ventilate the vehicle 100. The air conditioner 102 adjusts the temperature and the humidity of mixed air of the fresh air 111 supplied from the ventilation apparatus 101 and recirculating air 115 from the inside of the vehicle to generate conditioned air 112 and supplies the conditioned air 112 into the inside of the vehicle.

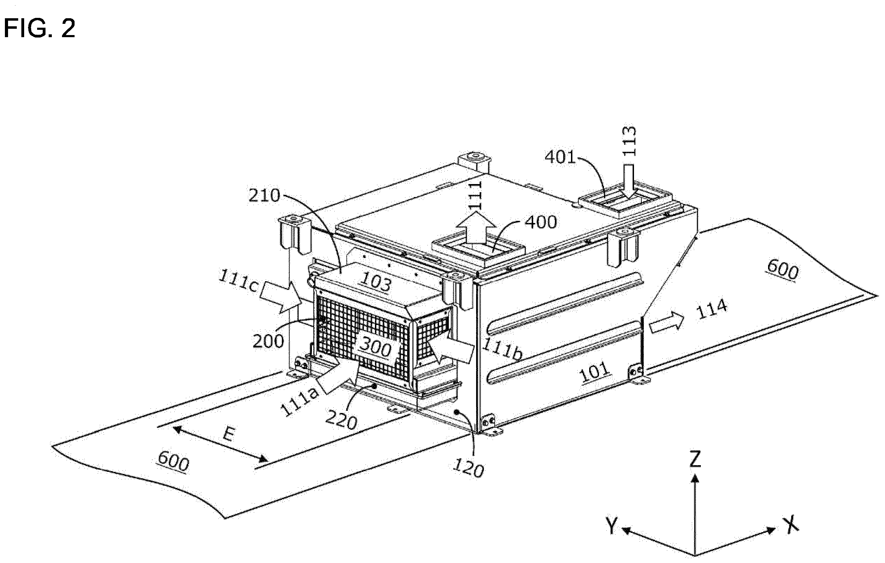

In the present embodiment, a dust collector 103 (refer to FIG. 2) is provided at a fresh air intake port of the ventilation apparatus 101. The dust collector 103 has a function of removing dust which have been in the atmosphere, fallen leaves which have fallen on the rail, and so forth if they are mixed in the fresh air 111 taken in from the outside of the vehicle.

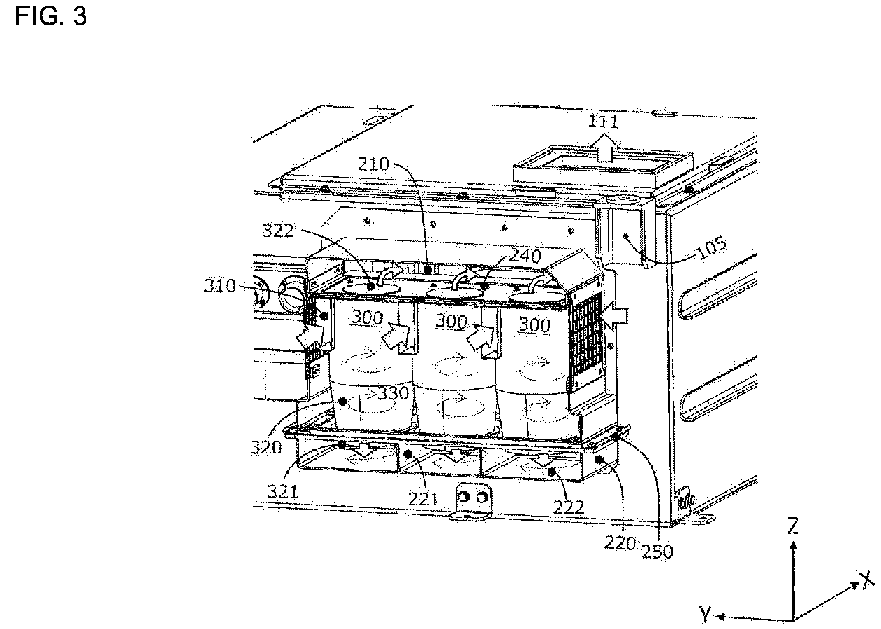

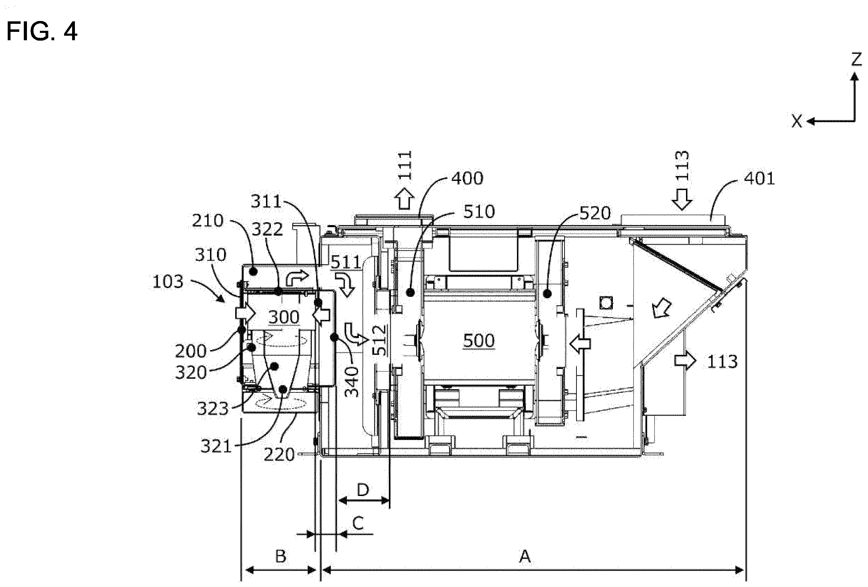

FIG. 2 is a perspective view of the ventilation apparatus that includes the dust collector according to the present embodiment, and FIG. 3 is a partial sectional view of the dust collector of the ventilation apparatus according to the present embodiment, taken along a vertical plane orthogonal to the vehicle longitudinal direction. FIG. 4 is a sectional view of the ventilation apparatus including the dust collector according to the present embodiment, taken along a vertical plane extending along the vehicle longitudinal direction.

The ventilation apparatus 101 to which the dust collector 103 that removes dust and so forth included in the air outside the vehicle is annexed is fixed under the floor of the vehicle 100 utilizing a hanging implement 105 (FIG. 3) provided on a housing of the ventilation apparatus 101. The ventilation apparatus 101 includes a fresh air intake port (not depicted) through which fresh air is taken in, a fresh air discharge port 400 through which the fresh air taken in is discharged, an exhaust air intake port 401 through which exhaust air in the vehicle is taken in, and an exhaust air discharge port (not depicted) through which the exhaust air taken in is discharged.

The fresh air discharge port 400 is connected to a fresh air duct provided on the vehicle 100 and serves as a start point of a flow passage for supplying fresh air to the air conditioner 102. The exhaust air intake port is connected to an exhaust dust provided on the vehicle 100. The exhaust duct provided on the vehicle 100 introduces exhaust air from associated blocks of the vehicle 100 to the ventilation apparatus 101.

On the upstream side of the fresh air intake port of the ventilation apparatus 101, the dust collector 103 is provided which removes dust, fallen leaves, and so forth included in the fresh air 111 to secure fresh air having increased cleanliness. The dust collector 103 is installed in a cantilever fashion at one end of the ventilation apparatus 101 in the X direction and is fixed integrally to the ventilation apparatus 101.

The dust collector 103 includes: a metal net 200; a housing in the form of a parallelepiped configured from a back plate 340 (FIG. 4) connected to the metal net 200, and so forth; three cyclone tubular bodies 300 of a substantially cylindrical shape for changing fresh air taken in into whirling flows; a dust collection box 220 provided below the cyclone tubular bodies 300 and temporarily accumulating dust and so forth collected by the cyclone tubular bodies 300; and a cap-shaped flow passage 210 that collects fresh air having been increased in cleanliness by separating dust and so forth above the cyclone tubular bodies 300. It is to be noted that the number of cyclone tubular bodies 300 is optional, and here, an example in which three cyclone tubular bodies 300 each provided uprightly along the Z direction are provided is depicted as depicted in FIG. 3. The dust collection box 220 is removably attached to the dust collector 103 by bolts, a latch, or the like.

The housing of the dust collector 103 includes a metal net 200 on each of three faces among four vertical side faces (on one face in the X direction and the opposite faces in the Y direction) thereof, and includes the back plate 340 on the remaining one face. Since the metal net 200 is provided on the three faces of the housing, the dust collector 103 can introduce fresh air having passed through the metal nets 200 from the X direction (111a) and the Y direction (111b and 111c) into the inside of the housing.

As depicted in FIG. 4, each cyclone tubular body 300 includes a cyclone inner tube 323 having an axis in the vertical direction and a cyclone outer tube 320 having an axis in the vertical direction similarly and including the cyclone inner tube 323 therein. A first air supply port 310 and a second air supply port 311 are connected to a flow passage defined by the cyclone outer tube 320 and the cyclone inner tube 323.

Fresh air having passed through the metal net 200 and flown into the dust collector 103 flows into the inside of the cyclone tubular bodies 300 from the first air supply port 310 and the second air supply port 311 both provided along the X direction in the cyclone tubular body 300. Since the first air supply port 310 and the second air supply port 311 introduce the fresh air into tangential directions along the X direction of a horizontal cross section of the cyclone tubular body 300 of a cylindrical shape, the fresh air having flowed into the inside of the cyclone tubular body 300 forms a whirl flow 330 (FIG. 3). The dimension of the meshes of the metal net 200 is set to be a little smaller than the dimensions of the first air supply port 310 and the second air supply port 311 such that foreign matters having a comparatively large size such as fallen leaves and feathers are suppressed from being sucked into the cyclone tubular body 300.

In the process when the fresh air having flowed into the cyclone tubular body 300 and whirling along the inner side face of the cyclone outer tube 320 passes through the flow passage between the cyclone outer tube 320 and the cyclone inner tube 323, foreign matters such as dust and fallen leaves included in the fresh air are pressed against the inner wall face of the cyclone outer tube 320 by the centrifugal force and are separated as foreign matters from the fresh air. The separated foreign matters drop downwardly along the inner side face of the cyclone outer tube 320 and are accumulated into the dust collection box 220 provided below the cyclone tubular body 300.

The fresh air having been increased in cleanliness with the foreign matters removed is led down to a lower end portion of the cyclone outer tube 320 while being whirled and then moved up in the Z direction passing through the inner side of the cyclone inner tube 323. The fresh air coming to an upper end portion of the cyclone inner tube 323 is aggregated in the cap-shaped flow passage 210 that is shared by the upper end portions of the plurality of cyclone tubular bodies 300 through openings 322, passes through an air supply blower front chamber 511 configured in the inside of the housing of the ventilation apparatus 101 and is sucked from an air supply blower suction port 512 into an air supply blower 510.

Thereafter, the fresh air whose static pressure is raised by the air supply blower 510 is supplied from the fresh air discharge port 400 to the air conditioner 102 via a fresh air duct (not depicted). The air supply blower 510 and an exhaust blower 520 are driven by a common electric motor 500.

Since the first air supply port 310 and the second air supply port 311 are provided at two places on the cyclone tubular body 300, the air supply area can be increased in comparison with a case in which fresh air is taken in from an air supply port at one place. Further, since fresh air having a low flow speed is taken in from the plurality of air supply ports, the air supply efficiency can be increased thereby to reduce the inflow loss (resistance) to the cyclone tubular body 300. Further, since the inflow loss to the cyclone tubular body 300 can be reduced, fluid noise generated at the first air supply port 310 (second air supply port 311) of the cyclone tubular body 300 can be suppressed.

The dust collection box 220 has compartments 222 partitioned by partition plates 221 according to the number of cyclone tubular bodies 300 as depicted in FIG. 3. Although the whirl flow 330 including much dust whirls in the inside of the dust collection box 220, by providing the plurality of compartments 222, the flow speed of the whirl flow 330 passing through corner portions (angle portions) of the compartments 222 can be lowered. Therefore, since a larger amount of dust can be caught into the compartments 222 from within the whirl flows 330 having the lowered flow speed, the dust collection efficiency can be increased. Furthermore, since the flow speed of the whirl flows 330 at corner portions (angle portions) of the compartments 222 is low, the dust and so forth caught once can be suppressed from being taken back into the whirl flows 330 to be sent to the ventilation apparatus 101.

Referring to FIG. 4, if the dimension of the ventilation apparatus 101 along the X direction is represented by A, and similarly, the projection dimension of the dust collector 103 annexed to the ventilation apparatus 101 and projected in the X direction is represented by B, then by setting the dimension A to 5 to 7 times the dimension B, while a high dust collection performance of the dust collector 103 is secured, reduction in size of the ventilation apparatus 101 to which the dust collector 103 is annexed can be achieved. Therefore, the ventilation apparatus 101 can be installed under the floor of the vehicle 100.

If the widthwise dimension of the dust collector 103 in the Y direction is represented by E (FIG. 2), then by setting the dimension E to 2 to 4 times the dimension B, an installation space for cyclone tubular bodies required to maintain a high dust collection efficiency can be secured.

As depicted in FIG. 4, the dust collector 103 is fixed to the ventilation apparatus 101 in such a manner that it enters the ventilation apparatus 101 such that the back plate 340 that forms part of the housing of the dust collector 103 comes near to the air supply blower 510 from an end face of the ventilation apparatus 101. The back plate 340 is placed at a position spaced by a dimension D in the X direction from the air supply blower suction port 512 and configures part of a wall of the air supply blower front chamber 511, which extends from the exit of the cap-shaped flow passage 210 provided in the dust collector 103 to the air supply blower suction port 512. By this configuration, the dimension (A + B) in the X direction of the whole in which the dust collector 103 is fixed to the ventilation apparatus 101 can be reduced, and therefore, the installation space for various equipment under the floor of the vehicle 100 can be reduced.

If the dimension in the X direction between the second air supply port 311 and the back plate 340 is represented by C and the dimension in the X direction between the back plate 340 and the air supply blower suction port 512 is represented by D, then by setting the dimension C to two to four times the dimension D, increase in intake loss by the second air supply port 311 and pressure loss by the air supply blower front chamber 511 can be suppressed.

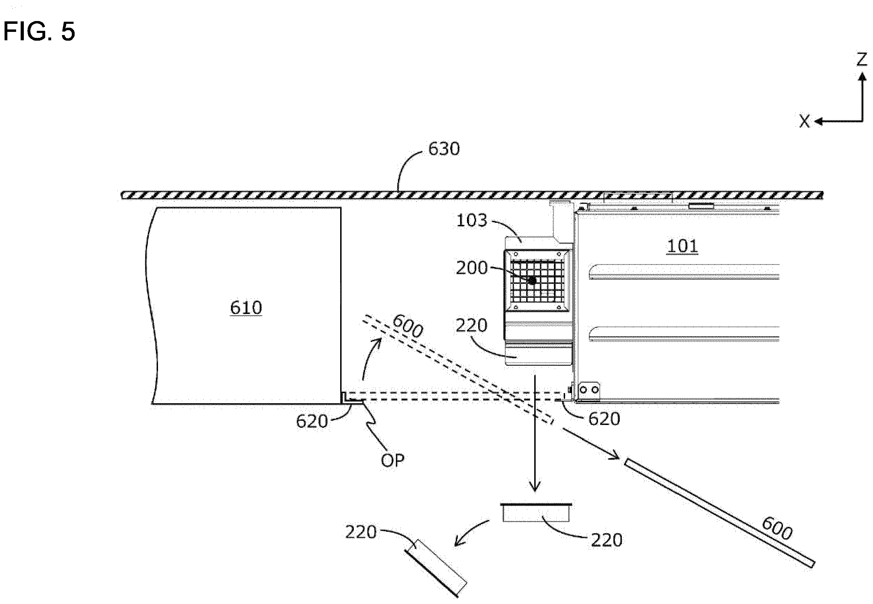

FIG. 5 is a view schematically depicting a procedure for recovering dust separated by the dust collector annexed to the ventilation apparatus of the present embodiment. Dust and so froth accumulated in the dust collection box 220 are taken out from the dust collection box 220 and discharged at the time of periodic inspection of the vehicle 100.

In the following, a procedure for discarding dust and so forth collected by the dust collector 103 is described. First, a lower closing plate 600 positioned below the dust collector 103 is removed from under the floor of the vehicle 100 that stops at an inspection and repair warehouse or the like. The lower closing plate 600 is laid across the ventilation apparatus 101 and equipment adjacent to the ventilation apparatus 101 (for example, a main converter 610).

In a specific procedure for removing the lower closing plate 600, bolts (not depicted) for fixing the lower closing plate 600 to receiving portions 620 at a lower end portion of the ventilation apparatus 101 and the main converter 610 are removed first, and an end portion of the lower closing plate 600 in the X direction is repelled upwardly once and then the lower closing plate 600 is slidably drawn out obliquely downwardly. Consequently, the dust collection box 220 is exposed through an opening OP formed as a result of the drawing out of the lower closing plate 600. Therefore, bolts, a latch, or the like for fixation to the dust collector 103 is removed and the dust collection box 220 is taken out downwardly of the vehicle 100 from the opening OP. Then, the dust and so forth are discarded from the dust collection box 220 to a predetermined place. Since the removal of the dust collection box 220 allows the lower ends of the cyclone tubular bodies 300 (FIG. 4) built in the dust collector 103 to be exposed, cleaning of the cyclone tubular bodies 300 may be performed from here.

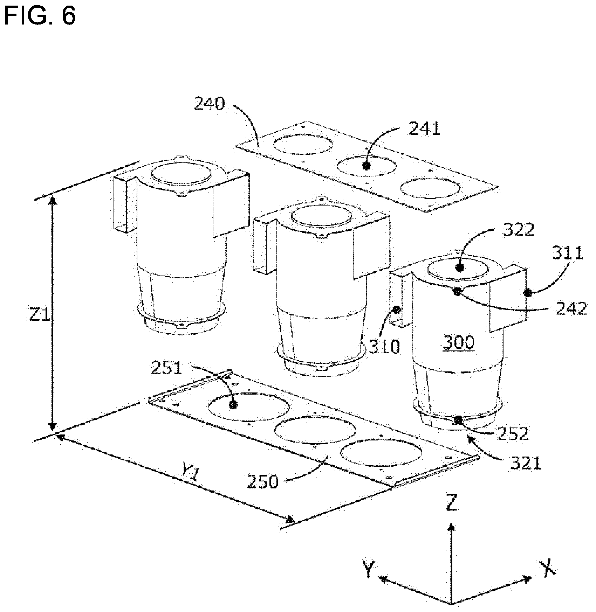

FIG. 6 is an exploded view depicting part of the dust collector annexed to the ventilation apparatus of the present embodiment. The cyclone tubular bodies 300 built in the dust collector 103 are supported by an upper plate 240 to which upper end portions of the cyclone tubular bodies 300 are fixed along the Y direction and which has three through-holes 241 through which fresh air to be introduced from the cyclone tubular bodies 300 into the cap-shaped flow passage 210 passes, and by a lower plate 250 to which circumferential edge portions of dust collection ports 321 at lower end portions of the cyclone tubular bodies 300 are fixed along the Y axis direction and which has three through-holes 251 through which dust and so forth separated by the cyclone tubular bodies 300 pass.

The inner diameter of an upper end of the cyclone inner tube 323 and the inner diameter of the through-holes 241 of the upper plate 240 have a substantially same dimension. Upper end portions of the cyclone tubular bodies 300 and the upper plate 240 are fastened together through a removable mechanical fastening portion 242 (for example, by a fastening screw). Similarly, lower end portions of the cyclone tubular bodies 300 and the lower plate 250 are fastened together through a removable mechanical fastening portion 252 (for example, by a fastening screw).

The widthwise dimension Y1 and the heightwise dimension Z1 of a cyclone unit configured from a plurality of cyclone tubular bodies 300 and the upper plate 240 and lower plate 250 are set smaller than the Y direction dimension and the Z direction dimension of the metal net 200 (refer to FIG. 2) arranged in an opposing relation to the back plate 340. Therefore, if the metal net 200 opposing to the back plate 340 is removed in the state in which the dust collector 103 is fixed to the ventilation apparatus 101 (refer to FIG. 3), then the complete set of the cyclone unit can be drawn out downwardly of the vehicle 100 after it is pulled out in the X direction.

Consequently, it is possible to disassemble and clean the cyclone tubular bodies 300 individually and perform visual inspection and so forth of them. Therefore, it is also possible to exchange only the cyclone tubular body 300 in which some abnormality is found. Further, if the cyclone tubular bodies 300 (three cyclone tubular bodies 300) are formed in the same shape, then common parts can be used for them, and therefore, the cyclone tubular bodies 300 can be obtained and exchanged at a low cost.

Table 1 indicates a result of an experiment for verification of the dust collection performance of the cyclone tubular bodies 300 according to the present embodiment. The dust collection performance was verified using four different foreign matters supposed to be caught by the dust collector 103 when the vehicle 100 travels along a business route, by referring to foreign matters and so forth that were caught by a prefilter provided at the fresh air intake port of the ventilation apparatus used in the business route.

**[Table 1]**

| Dust collection efficiency of various kinds of dust (%) | | | | |
|---|---|---|---|---|
| | Quartz sand | Iron powder | Feather | Dead leaves |
| Large air volume (when traveling at high speed) | 94 | 98 | 99 | 100 |
| Small air volume (when traveling at low speed, when stopping) | 94 | 98 | 94 | 100 |

Here, in the ventilation apparatus 101, the number of rotations of the electric motor 500 for driving the air supply blower 510 and the exhaust blower 520 is increased to obtain a large air amount and a high static pressure such that the difference between the supply air amount of the air supply blower 510 and the exhaust air amount of the exhaust blower 520 of the ventilation apparatus 101 due to the vehicle outside pressure fluctuation when the vehicle is driven at a high speed is reduced. On the other hand, when driving of the vehicle at a low speed including when stopping of the vehicle, in order to reduce the power consumption, the number of rotations of the electric motor 500 is reduced to obtain a small air amount. Therefore, the air amount of the dust collector 103 was evaluated at the two levels of the large air amount and the small air amount.

Further, as the foreign matters, four types including quartz sand, iron powder (powder of several tens to several hundreds um), feather, and dead leaves (cut to several mm) were applied, and the dust collection performance of the dust collector 103 for the individual foreign matters was evaluated by defining the dust collection efficiency as the ratio between the weight of the foreign matters before suction by the dust collector 103 and the weight of the foreign matters separated by the dust collector 103 and recovered by the dust collection box 220. Specifically, the dust collection efficiency 99% in Table 1 signifies that foreign matters are collected by 99% in weight ratio while foreign matters are mixed by the remaining 1% in the gas. As indicated by Table 1, a high dust collection efficiency was confirmed for all foreign matters, and it was confirmed that the dust collector 103 has a sufficiently high dust collection performance.

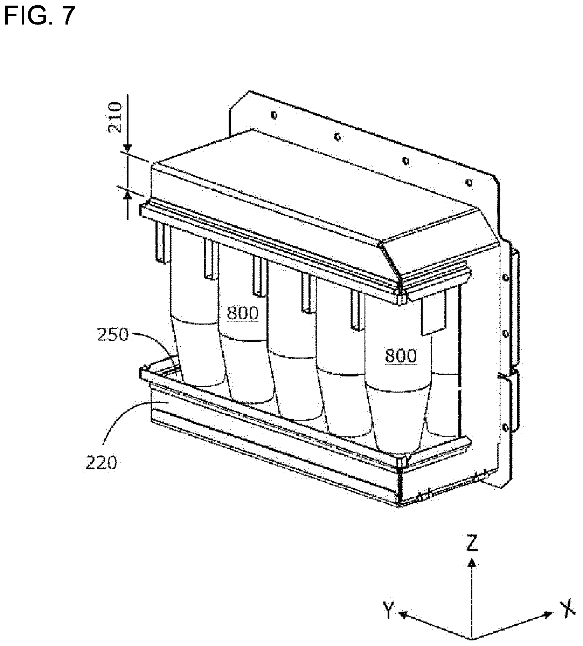

FIG. 7 is a perspective view depicting another example of the dust collector annexed to the ventilation apparatus of the present embodiment and is depicted in a state in which the metal net is removed. Depending upon the environment of a line section in which the vehicle 100 travels, dust including much quartz sand therein is sometimes recovered. In this manner, it is possible to change the number of cyclone tubular bodies 300 according to the environment of the line section to adjust the dust collection performance of the dust collector 103 in response to the composition of the dust. For example, where it is desired to obtain a higher dust collection performance while permitting increase in the pressure loss of the dust collector 103 (in such a case that very small powder down to less than several um is to be collected or in a like case), it is possible to reduce the outer diameter of the cyclone tubular bodies 300 to adjust the wind amount such that high turning force (separation force) is generated at the time of the same wind amount.

In such a case as just described, although the dust collector 103 somewhat increases in volume and weight in order to secure a higher dust collection performance and to maintain a predetermined ventilation air amount, increasing the number of cyclone tubular bodies to 10, for example, copes with the case. In this example, two rows each including five cyclone tubular bodies 800 of a small diameter arranged in the Y direction are arranged in the X direction as depicted in FIG. 7. Even if the number of cyclone tubular bodies increases or decreases, if a configuration of a corresponding cap-shaped flow passage 210 and dust collection box 220 is used, then the dust collector 103 can be configured which maintains a predetermined ventilation volume and has a higher dust collection performance while securing high maintainability and suppressing retaking in of dust and so forth.

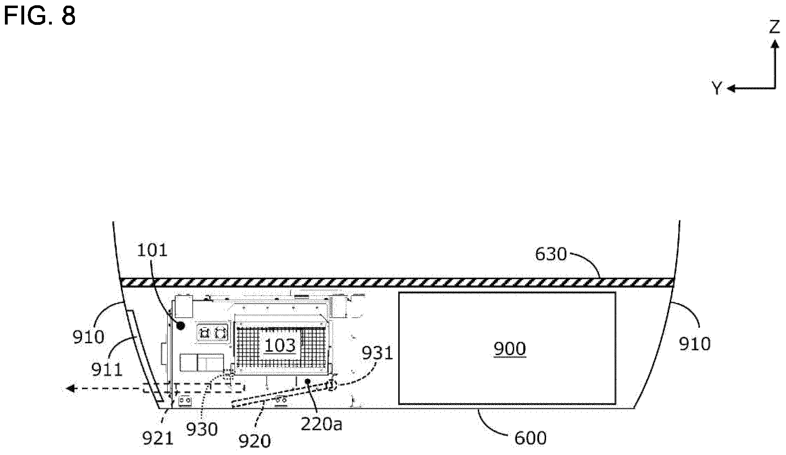

FIG. 8 is a sectional view depicting another embodiment of the ventilation apparatus according to the present embodiment in a state in which the ventilation apparatus is arranged under the floor of the vehicle. In the embodiment described above, the ventilation apparatus is configured such that the dust collection box 220 can be drawn out downwardly of the vehicle 100 as depicted in FIG. 5. In the present embodiment, the dust collection box 220 can be drawn out in the Y direction. A procedure of this is described below.

Below the floorboard 630 of the vehicle 100, underfloor equipment 900 such as the ventilation apparatus 101 having the dust collector 103, the air conditioner 102 (refer to FIG. 1), an auxiliary power supply apparatus or the like is provided. The vehicle 100 includes side skirts 910 extending downwardly from the opposite end portions of the floorboard 630 in the Y direction. The lower closing plate 600 is provided so as to extend from a lower end portion of one of the side skirts 910 to a lower end portion of the other side skirt 910. The side skirt 910 provided at a position from which a dust collection tray 921, hereinafter described, is drawn out includes a lid part 911 capable of being opened and closed (removable) by a latch or the like.

The ventilation apparatus 101 includes a dust collection box part 220a provided below the cyclone tubular bodies 300 (refer to FIG. 3), the dust collection tray 921 into which collected dust is to be accumulated, and a bottom plate 920 that supports the dust collection tray 921. The bottom plate 920 is fixed at one end portion thereof in the Y direction (at a portion rather near to the center of the vehicle 100 in the Y direction) by a hinge 931 and includes a latch 930 removably mounted at the other end portion thereof in the Y direction. If the latch 930 is unlatched, then since the bottom plate 920 can be pivoted around the hinge 931 in the Y-Z plane, the dust collection tray 921 placed on the bottom plate 920 can be drawn out in the Y direction.

In the following, a procedure for discarding collected dust and so forth is described. When the vehicle 100 enters an inspection and repair warehouse or the like to perform inspection and so forth, the latch of the lid part 911 provided on the side skirt 910 is unlatched and the lid part 911 is opened. Thereafter, the latch 930 at a lower portion of the dust collector 103 is unlatched and the bottom plate 920 is pivoted downwardly around the hinge 931 as indicated by a broken line. Thereafter, the dust collection tray 921 supported on the bottom plate 920 is taken out from the lid part 911 to the outside of the vehicle 100 to discard the collected dust and so forth.

According to the configuration described, there is no necessity to remove the lower closing plate 600 of the vehicle 100 in order to discard dust and so forth. Therefore, the man-hours for the discarding work of collected dust can be reduced, and consequently, the maintenance cost can be suppressed.

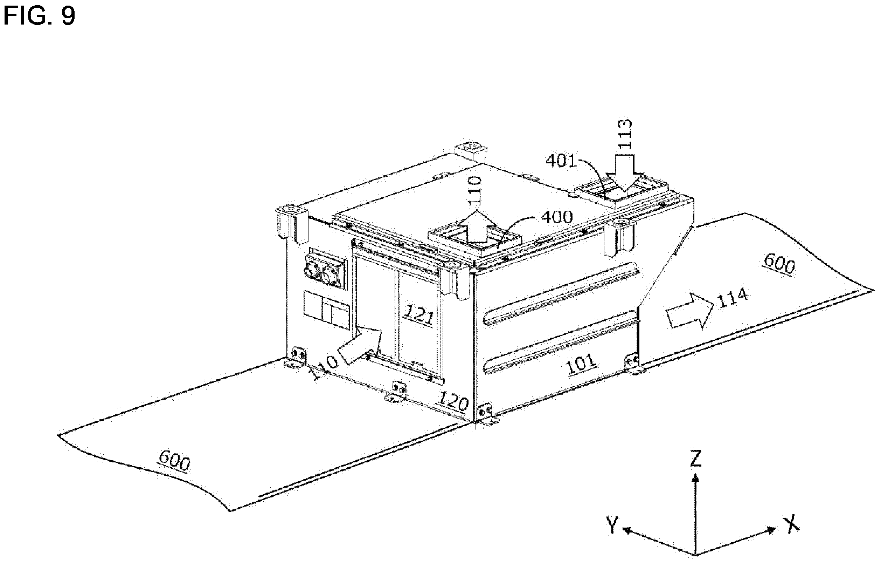

FIG. 9 is a view depicting an example of a conventional ventilation apparatus for reference. The conventional ventilation apparatus 101 includes, on one face of the ventilation apparatus 101 in the X direction (on a ventilation apparatus front face 120), an air supply port through which fresh air is take in, and includes, at the air supply port, a prefilter 121 made of a nonwoven fabric or the like in place of the dust collector 103 of the present embodiment. The configuration of the other part of the ventilation apparatus 101 is similar to that in the present embodiment.

In the ventilation apparatus of FIG. 9, as the amount of dust and so forth that are caught by the prefilter 121 increases, the area of the air supply port decreases, and there is the possibility that this may result in decrease in the air supply amount. Therefore, depending upon the season, it is necessary to increase the frequency of check and replacement of the prefilter 121.

In contrast, according to the present embodiment described hereinabove, the ventilation apparatus 101 having the dust collector 103 suppresses rise of the maintenance cost, suppresses the pressure loss, and secures a high dust collection efficiency. Thus, a VENTILATOR FOR RAILROAD VEHICLE can be provided which can suppress the installation space of the apparatus.

It is to be noted that the present invention is not limited to the embodiments described above and includes various modifications. For example, the above-described embodiments are described in detail for better understandings of the present invention and are not necessarily restricted to an embodiment that includes all configurations described hereinabove. As long as the resulting modification falls within the scope of protection defined in the appended claims, it is possible to replace part of components of a certain embodiment with a component of a different embodiment, and also it is possible to add components of another embodiment to a component of a certain embodiment. Further, within the scope of protection defined in the appended claims, it is possible to perform addition, deletion, or replacement of a component to, from, or with part of components of each embodiment.

### Description of Reference Characters

100: Vehicle
101: Ventilation apparatus
102: Air conditioner
103: Dust collector
105: Hanging implement
111: Fresh air
112: Conditioned air
113: Exhaust air in vehicle
114: Exhaust air
115: Recirculating air
120: Ventilation apparatus front face
121: Prefilter
200: Metal net
210: Cap-shaped flow passage
220: Dust collection box
220a: Dust collection box part
221: Partition plate
222: Compartment
240: Upper plate
241: Through-hole
242: Mechanical fastening portion
250: Lower plate
251: Through-hole
252: Mechanical fastening portion
300: Cyclone tubular body
310: First air supply port
311: Second air supply port
320: Cyclone outer tube
321: Dust collection port
323: Cyclone inner tube
330: Whirl flow
340: Back plate
400: Fresh air discharge port
401: Exhaust air intake port
500: Electric motor
510: Air supply blower
511: Air supply blower front chamber
512: Air supply blower suction port
520: Exhaust blower
600: Lower closing plate
610: Main converter
620: Receiving portion
630: Floorboard
800: Cyclone tubular body of small diameter
900: Underfloor equipment
910: Side skirt
911: Lid part
920: Bottom plate
921: Dust collection tray
930: Latch
931: Hinge

## Claims

1. A ventilator for railroad vehicle, comprising:
a ventilation apparatus (101) for replacing air in a vehicle (100); and
a dust collector (103) annexed to the ventilation apparatus (101), wherein
the dust collector (103) includes a housing, and a cyclone tubular body (300) provided in an inside of the housing,
the ventilation apparatus (101) includes an air supply blower (510) that supplies fresh air (111) from outside the vehicle (100), the fresh air (111) having passed through the cyclone tubular body (300), to the vehicle (100),
**characterised in that**
the housing includes a metal net (200) through which fresh air (111) is to be taken into the cyclone tubular body (300) and a back plate (340) connecting to the metal net (200), and
the dust collector (103) is connected to the ventilation apparatus (101) such that the back plate (340) is positioned in an inside of the ventilation apparatus (101).

2. The ventilator for railroad vehicle according to claim 1, wherein
the ventilation apparatus (101) has an air supply blower front chamber (511) on an upstream side of the air supply blower (510); and
the back plate (340) configures part of a wall of the air supply blower front chamber (511).

3. The ventilator for railroad vehicle according to claim 1, wherein
the dust collector (103) includes, below the cyclone tubular body (300), a dust collection box (220) into which foreign matters collected by the cyclone tubular body (300) are to be accumulated; and
the dust collection box (220) has the number of compartments (222) corresponding to the number of the cyclone tubular bodies (300).

4. The ventilator for railroad vehicle according to claim 3, wherein the dust collection box (220) is capable of being separated from the dust collector (103) fixed to the ventilation apparatus (101).

5. The ventilator for railroad vehicle according to claim 1, wherein
the housing is a parallelepiped that has a metal net (200) on each three faces of four vertical side faces of the housing and has the back plate (340) on a remaining one face of the four vertical side faces,
the cyclone tubular body (300), an upper plate (240) that fixes an upper end portion of the cyclone tubular body (300), and a lower plate (250) that fixes a lower end portion of the cyclone tubular body (300) cooperatively configure a cyclone unit, and
the cyclone unit has a heightwise dimension and a widthwise dimension that are set smaller than a heightwise dimension and a widthwise dimension of the metal net (200) arranged in an opposing manner to the back plate (340).

6. The ventilator for railroad vehicle according to any one of claims 3 to 5, comprising:
a dust collection box (220) having compartments (222) separated by a partition plate or plates (221).

7. The ventilator for railroad vehicle according to any one of claims 1 to 6, wherein a plurality of the cyclone tubular bodies (300) are arranged in a lined up relation in a direction intersecting an advancing direction of the rail vehicle (100).

## Patentansprüche

1. Lüfter für Schienenfahrzeuge, umfassend:
eine Belüftungsvorrichtung (101) zum Ersetzen von Luft in einem Fahrzeug (100); und
einen Staubsammler (103), der an die Belüftungsvorrichtung (101) angeschlossen ist, wobei
der Staubsammler (103) ein Gehäuse und einen rohrförmigen Zyklonkörper (300) aufweist, der im Inneren des Gehäuses vorgesehen ist,
die Belüftungsvorrichtung (101) ein Luftzufuhrgebläse (510) umfasst, das dem Fahrzeug (100) Frischluft (111) von außerhalb des Fahrzeugs zuführt, wobei die Frischluft (111) den rohrförmigen Zyklonkörper (300) passiert hat,
**dadurch gekennzeichnet, dass**
das Gehäuse ein Metallnetz (200), durch das Frischluft (111) in den rohrförmigen Zyklonkörper (300) geleitet werden soll, und eine Rückwandplatte (340), die mit dem Metallnetz (200) verbunden ist, umfasst, und
der Staubsammler (103) mit der Belüftungsvorrichtung (101) so verbunden ist, dass die Rückwandplatte (340) im Inneren der Belüftungsvorrichtung (101) angeordnet ist.

2. Lüfter für Schienenfahrzeuge nach Anspruch 1, wobei
die Belüftungsvorrichtung (101) eine Luftzufuhrgebläse-Vorderkammer (511) auf einer stromaufwärts gelegenen Seite des Luftzufuhrgebläses (510) aufweist; und
die Rückwandplatte (340) einen Teil einer Wandung der vorderen Kammer des Luftversorgungsgebläses (511) bildet.

3. Lüfter für Schienenfahrzeuge nach Anspruch 1, wobei
der Staubsammler (103) unterhalb des rohrförmigen Zyklonkörpers (300) einen Staubsammelbehälter (220) aufweist, in dem die von dem rohrförmigen Zyklonkörper (300) gesammelten Fremdkörper gesammelt werden; und
der Staubsammelbehälter (220) eine Anzahl von Fächern (222) aufweist, die der Anzahl der rohrförmigen Zyklonkörper (300) entspricht.

4. Lüfter für Schienenfahrzeuge nach Anspruch 3, wobei der Staubsammelbehälter (220) von dem an der Belüftungsvorrichtung (101) befestigten Staubsammler (103) getrennt werden kann.

5. Lüfter für Schienenfahrzeuge nach Anspruch 1, wobei
das Gehäuse ein Parallelepiped ist, das auf drei von vier vertikalen Seitenflächen des Gehäuses jeweils ein Metallnetz (200) und auf einer verbleibenden der vier vertikalen Seitenflächen die Rückwandplatte (340) aufweist,
der rohrförmige Zyklonkörper (300), eine obere Platte (240), die einen oberen Endabschnitt des rohrförmigen Zyklonkörpers (300) befestigt, und eine untere Platte (250), die einen unteren Endabschnitt des rohrförmigen Zyklonkörpers (300) befestigt, zusammen eine Zykloneinheit bilden, und
die Zykloneinheit eine Höhenabmessung und eine Breitenabmessung hat, die kleiner sind als eine Höhenabmessung und eine Breitenabmessung des Metallnetzes (200), das gegenüber der Rückwandplatte (340) angeordnet ist.

6. Lüfter für Schienenfahrzeuge nach einem der Ansprüche 3 bis 5, umfassend:
einen Staubsammelbehälter (220) mit durch eine Trennplatte oder - platten (221) getrennten Fächern (222).

7. Lüfter für Schienenfahrzeuge nach einem der Ansprüche 1 bis 6, wobei eine Vielzahl der rohrförmigen Zyklonkörper (300) in einer Richtung aufgereiht sind, die eine Vorschubrichtung des Schienenfahrzeugs (100) schneidet.

## Revendications

1. Ventilateur pour véhicule ferroviaire, comprenant :
un appareil (101) de ventilation pour remplacer l'air dans un véhicule (100) ; et
un collecteur (103) de poussières annexé à l'appareil (101) de ventilation, dans lequel
le collecteur (103) de poussières inclut un logement, et un corps tubulaire (300) de cyclone prévu dans un intérieur du logement,
l'appareil (101) de ventilation inclut une soufflante (510) d'alimentation d'air qui alimente de l'air frais (111) depuis l'extérieur du véhicule (100), l'air frais (111) étant passé à travers le corps tubulaire (300) de cyclone, dans le véhicule (100),
**caractérisé en ce que**
le logement inclut un treillis métallique (200) à travers lequel l'air frais (111) doit être fait pénétrer dans le corps tubulaire (300) de cyclone et une plaque arrière (340) se connectant au treillis métallique (200), et
le collecteur (103) de poussières est connecté à l'appareil (101) de ventilation de telle façon que la plaque arrière (340) est positionnée dans un intérieur de l'appareil (101) de ventilation.

2. Ventilateur pour véhicule ferroviaire selon la revendication 1, dans lequel
l'appareil (101) de ventilation a une chambre avant (511) de soufflante d'alimentation d'air sur un côté amont de la soufflante (510) d'alimentation d'air ; et
la plaque arrière (340) configure une partie d'une paroi de la chambre avant (511) de soufflante d'alimentation d'air.

3. Ventilateur pour véhicule ferroviaire selon la revendication 1, dans lequel
le collecteur (103) de poussières inclut, en-dessous du corps tubulaire (300) de cyclone, une boîte (220) de collecte de poussières dans laquelle des matières étrangères collectées par le corps tubulaire (300) de cyclone doivent être accumulées ; et
la boîte (220) de collecte de poussières a le nombre de compartiments (222) correspondant au nombre des corps tubulaires (300) de cyclone.

4. Ventilateur pour véhicule ferroviaire selon la revendication 3, dans lequel la boîte (220) de collecte de poussières est apte à être séparée du collecteur (103) de poussières fixé à l'appareil (101) de ventilation.

5. Ventilateur pour véhicule ferroviaire selon la revendication 1, dans lequel
le logement est un parallélépipède qui a un treillis métallique (200) sur chacune de trois faces parmi quatre faces latérales verticales du logement et a la plaque arrière (340) sur une face restante parmi les quatre faces latérales verticales,
le corps tubulaire (300) de cyclone, une plaque supérieure (240) qui fixe une partie d'extrémité supérieure du corps tubulaire (300) de cyclone, et une plaque inférieure (250) qui fixe une partie d'extrémité inférieure du corps tubulaire (300) de cyclone configurent en coopération une unité de cyclone, et
l'unité de cyclone a une dimension dans le sens de la hauteur et une dimension dans le sens de la largeur qui sont définies plus petites qu'une dimension dans le sens de la hauteur et une dimension dans le sens de la largeur du treillis métallique (200) agencé d'une manière opposée à la plaque arrière (340).

6. Ventilateur pour véhicule ferroviaire selon l'une quelconque des revendications 3 à 5, comprenant :
une boîte (220) de collecte de poussières ayant des compartiments (222) séparés par une plaque ou des plaques (221) de cloisonnement.

7. Ventilateur pour véhicule ferroviaire selon l'une quelconque des revendications 1 à 6, dans lequel une pluralité des corps tubulaires (300) de cyclone sont agencés dans une relation alignée dans un sens croisant un sens d'avancement du véhicule ferroviaire (100).
